# EUROPÄISCHE PATENTANMELDUNG

(11) **EP 2 347 644 A1**
(43) Veröffentlichungstag der Anmeldung: **27.07.2011**
(21) Anmeldenummer: 11151556.5
(22) Anmeldetag: 20.01.2011
(51) Int. Cl.: A01B 73/02

(54) **Bodenbearbeitungsgerät mit einer Sicherungseinrichtung**

(30) Priorität: 20.01.2010 DE 102010001039
(71) Anmelder: Düvelsdorf Handelsgesellschaft mbH, 28870 Ottersberg (DE)
(72) Erfinder: Düvelsdorf, Adolf, 28870, Ottersberg (DE)
(74) Vertreter: Eisenführ, Speiser & Partner

(57) **Zusammenfassung**

Die vorliegende Erfindung betrifft ein mehrteiliges Bodenbearbeitungsgerät zur Bearbeitung eines Erdbodens, mit einem Hauptteil (2), an dem zumindest ein Klappteil (5, 6) beweglich angeordnet ist, einer mit dem zumindest einen Klappteil (5, 6) verbundenen Verstelleinrichtung (V), die einen Betätigungszylinder (10) und eine Verstellstange (11) aufweist, zum Versetzen des zumindest einen Klappteils (5, 6) von einer Grundposition in eine Arbeitsposition und zurück, und einer zwei Betriebsarten aufweisenden Sicherungseinrichtung (S), die mit der Verstelleinrichtung (V) in Wirkverbindung steht und vorgesehen ist zum Verriegeln der Verstelleinrichtung (V) in einer ersten Betriebsart zur Vermeidung eines unerwünschten Versetzens des zumindest einen Klappteils (5, 6) in die Arbeitsposition, und zum Aufheben der Verriegelung (V) in der zweiten Betriebsart der Sicherungseinrichtung (S). Die Sicherungseinrichtung (S) wirkt zwischen dem Betätigungszylinder (10) und der Verstellstange (11 ).

## Beschreibung

Die vorliegende Erfindung betrifft ein Bodenbearbeitungsgerät zur Anwendung in der Landwirtschaft oder im Gartenbau, und insbesondere ein mehrteiliges Bodenbearbeitungsgerät mit einer Sicherungseinrichtung.

Es sind mehrteilige Bodenbearbeitungsgeräte im Bereich der Landwirtschaft und des Gartenbaus zur Bearbeitung der Erdoberfläche (Erdboden) eines Felds bekannt, wobei insbesondere sogenannte Pflüge verwendet werden, bei denen eine Bodenbearbeitung mit einer vorbestimmten Tiefe erfolgt und Bodenschichten gewendet werden. Nach der Anwendung eines Pflugs, wobei größere Furchen in der bearbeiteten Bodenoberfläche entstanden sind, ist ein Glätten der Boden- oder Erdoberfläche erforderlich, wobei die mehrteiligen Bodenbearbeitungsgeräte in Form einer Egge zur Anwendung kommen. Die Egge stellt somit ein landwirtschaftliches Gerät dar zum Zerkleinern von überwiegend nach dem Pflügen auf dem Boden zurückbleibenden Erdschollen. Die entsprechende Glättung der Bodenoberfläche kann der Saatbettbereitung dienen.

Hierzu weist das landwirtschaftliche Gerät in Form einer Egge im Allgemeinen aus einem Hauptrahmen nach unten herausragende und aus einem Metall gebildete Zinken auf, die in Abhängigkeit von dem Gewicht der Egge und der Beschaffenheit des Bodens in vorbestimmter Tiefe in den Boden eindringen, so dass durch die Vielzahl der Zinken bei dem Bewegen der Egge über die Bodenoberfläche größere Erdstücke zerkleinert und ebenfalls größere Furchen ausgeglichen werden.

Im Allgemeinen wird eine Egge an einem Fahrzeug, wie Beispielsweise einem Traktor befestigt und in einer Arbeitsposition auf die zu bearbeitende Bodenoberfläche abgesenkt. Um eine angemessene Fläche in einem Bearbeitungszug zu bearbeiten, weist die Egge in ihrer flächigen Ausdehnung eine vorbestimmte Größe auf, die teilweise erheblich über die Breite des Fahrzeugs hinausragt. Soll die Egge mittels des Fahrzeugs zu einem Bearbeitungsort gebracht werden, dann müssen im Allgemeinen öffentliche Straßen oder Wege benutzt werden, so dass es erforderlich ist, die mehrteilig ausgeführte Egge in vorbestimmter Weise zusammen zu klappen, sodass eine zulässige Breite nicht überschritten wird. In diesem Transportzustand (zusammengeklappter Zustand) der Egge, in welchem diese nicht oder nur geringfügig über die Breite des Fahrzeugs hinausragt, kann auf öffentlichen Straßen und Wegen ein Transport zu einem Bestimmungsort durchgeführt werden.

Während des Transports der Egge ist es erforderlich, dass die zusammengeklappten Teile der mehrteiligen Anordnung nicht durch einen technischen Fehler oder durch eine unsachgemäße Bedienung in unerwünschter Weise ausgeklappt und in die Arbeitsstellung gebracht werden, da hierdurch insbesondere im Straßenverkehr eine erhebliche Gefährdung der weiteren Verkehrsteilnehmer besteht.

Bei bekannten Ausführungen von mehrteiligen und damit klappbaren Bodenbearbeitungseinrichtungen, wie der vorstehend beschriebenen Egge, besteht die Möglichkeit, jeweils das Ausklappen in die Arbeitsstellung und das Zusammenklappen in die Transportanordnung manuell oder mittels einer mechanischen Einrichtung vorzunehmen, wobei im Falle der mechanischen Einrichtung ein Antrieb über das Fahrzeug erfolgt, an dem die Egge befestigt ist.

Im Falle einer manuellen Handhabung der Einrichtung ist es erforderlich, dass diese vorschriftsmäßig zusammen geklappt und befestigt ist. Im Falle einer mechanischen Betätigung, beispielsweise mittels eines Hydraulikzylinders, der mit einer Hydraulikanlage des Fahrzeugs (Traktor) verbunden ist, tritt jedoch das Problem auf, dass die Betätigung durch einen Fahrer oder Bediener, der sich im Führerhaus des Fahrzeugs befindet, vorgenommen wird. Hierbei besteht die Möglichkeit, dass unbeabsichtigt während des Transports der Egge und somit beispielsweise während des Fahrens auf einer öffentlichen Straße oder einem Weg die Betätigung vorgenommen und somit ein unbeabsichtigtes Ausklappen der zuvor zusammengeklappten Egge bewirkt wird. Dies führt zu einer erheblichen Unfallgefahr und einer Gefährdung von Menschen. Ein unerwünschtes oder gefährliches Ausklappen der zusammengeklappten Einrichtung kann ebenfalls durch einen technischen Fehler oder durch ein Losrütteln bei Vibrationen und Schwingungen während der Fahrt verursacht werden.

Der vorliegenden Erfindung liegt daher die Aufgabe zugrunde, ein mehrteiliges Bodenbearbeitungsgerät der eingangs genannten Art mit einer Sicherungseinrichtung auszustatten, so dass ein fehlerbedingtes oder in Verbindung mit einer Fehlbedienung stehendes unbeabsichtigtes Ausklappen des Bodenbearbeitungsgeräts wirksam vermieden werden kann.

Erfindungsgemäß wird diese Aufgabe durch ein Bodenbearbeitungsgerät mit einer Sicherungseinrichtung gemäß den Merkmalen des Patentanspruchs 1 gelöst.

Die Erfindung betrifft somit ein mehrteiliges Bodenbearbeitungsgerät zur Bearbeitung eines Erdbodens, mit einem Hauptteil, an dem zumindest ein Klappteil beweglich angeordnet ist, einer mit dem zumindest einen Klappteil verbundenen Verstelleinrichtung, die einen Betätigungszylinder und eine Verstellstange aufweist, zum Versetzten des zumindest einen Klappteils von einer Grundposition in eine Arbeitsposition und zurück, und einer zwei Betriebsarten aufweisenden Sicherungseinrichtung, die mit der Verstelleinrichtung in Wirkverbindung steht und vorgesehen ist zum Verriegeln der Verstelleinrichtung in einer ersten Betriebsart zur Vermeidung eines unerwünschten Versetzens des zumindest einen Klappteils in die Arbeitsposition, und zum Aufheben der Verriegelung in der zweiten Betriebsart der Sicherungseinrichtung. Die Sicherungseinrichtung wirkt zwischen dem Betätigungszylinder und der Verstellstange.

Mit der erfindungsgemäß vorgesehenen Sicherungseinrichtung wird ein unbeabsichtigtes oder zufälliges Ausklappen des mehrteiligen Bodenbearbeitungsgeräts wirksam verhindert, ungeachtet dessen, aus welchen Gründen das unbeabsichtigte und unerwünschte Ausklappen erfolgt. Die Sicherungseinrichtung des Bodenbearbeitungsgeräts verhindert somit einerseits bei einem technischen und insbesondere mechanischen Defekt und andererseits bei einer Fehlbedienung durch ein Bedienpersonal das unerwünschte ausklappen von Teilen des mehrteiligen Bodenbearbeitungsgeräts. Zur Entriegelung (d. h. zum Aufheben) der Sicherungseinrichtung ist es des Weiteren nicht erforderlich, dass das Bedienpersonal das Führerhaus des Fahrzeugs verlässt, da die Entriegelung im Führerhaus vorgenommen werden kann. Es ist auf diese Weise möglich, einerseits die Sicherheit insbesondere bei dem Transport und der Lagerung des Bodenbearbeitungsgeräts zu verbessern und andererseits die Handhabung oder Bedienung des Bodenbearbeitungsgeräts nicht zu erschweren.

Ferner kann erfindungsgemäß die sichernde Wirkung direkt zwischen Betätigungszylinder und Verstellstange ausgeübt werden. So wird eine sehr sichere Transportsicherung geschaffen, da die Sicherungseinrichtung entgegen der Ausdrückrichtung der Verstellstange wirkt. Somit wird die Sicherungseinrichtung in der gesicherten Stellung durch den Druck des Betätigungszylinders auf die Verstellstange in einer festen, mit Druck beaufschlagten Position gehalten, so dass in der gesicherten Stellung kein Spiel (Bewegungsspiel) in der Wirkverbindung zwischen Sicherungseinrichtung und Verstelleinrichtung auftreten können. Dies erzeugt eine sichere Transportsicherung, die auch durch Vibrationen oder Stöße, wie sie beispielswese bei landwirtschaftlichen Einsätzen durch den Transport des erfindungsgemäßen Bodenbearbeitungsgerätes über Acker und unebene Feldwege durch einen Traktor auftreten können, nicht gelöst werden kann.

Ferner können Spiel und Lose in der Wirkverbindung einer Sicherungseinrichtung dazu führen, dass durch die beschriebenen Vibrationen und Stöße die Elemente der Sicherungseinrichtung sich aneinander abreiben oder sogar losrütteln. Hierdurch kann eine Sicherungseinrichtung verschleißen bzw. Elemente können sich lösen. In beiden Fällen kann die Wirkung der Sicherungseinrichtung beeinträchtigt werden, wenn nicht sogar ausfallen. Auch dies wird erfindungsgemäß durch die Sicherungseinrichtung der vorliegenden Anmeldung vermieden, da durch die direkte Wirkung zwischen Betätigungszylinder und Verstellstange die Anzahl der Elemente der sichernden Wirkverbindung, die Spiel unterliegen können, minimiert wird und ferner durch die Druckbeaufschlagung dieser Wirkverbindung durch den Betätigungszylinder auf die Verstellstange ein Spiel zwischen den Elementen der sichernden Wirkverbindung deutlich minimiert, wenn nicht sogar ausgeschlossen werden kann.

Vorteilhaft ist bei der Sicherungseinrichtung der vorliegenden Erfindung auch, dass sie bei bestehenden mehrteiligen Bodenbearbeitungsgeräten nachgerüstet werden kann, da lediglich die i. Allg. frei zugängliche Verstelleinrichtung mit der Sicherungseinrichtung ausgerüstet werden muss. Eingriffe an den Rahmenteilen des Bodenbearbeitungsgeräts sind erfindungsgemäß nicht nötig. Daher kann eine Nachrüstung auch durch den Benutzer erfolgen und es ist kein Eingriff des Herstellers des Bodenbearbeitungsgeräts erforderlich.

Ferner kann die Sicherungseinrichtung der vorliegenden Erfindung zusammen mit der Verstelleinrichtung hergestellt und mit den weiteren Elementen des Bodenbearbeitungsgeräts montiert werden. Hierdurch wird eine einfache und kostengünstige Herstellung, insbesondere Montage der Verstelleinrichtung an dem Bodenbearbeitungsgerät ermöglicht.

Weitere Ausgestaltungen der vorliegenden Erfindung sind in den Unteransprüchen angegeben.

Die Sicherungseinrichtung kann die Verstelleinrichtung in der ersten Betriebsart mechanisch verriegeln, und das zumindest eine Klappteil ist lediglich in der zweiten Betriebsart der Sicherungseinrichtung von der Grundposition in die Arbeitsposition versetzbar. Auf diese Weise ist eine sichere Verriegelung gewährleistet.

Die Verstelleinrichtung kann ferner eine Sicherungsscheibe aufweisen, und die Sicherungseinrichtung kann ein Sicherungselement aufweisen, und in der ersten Betriebsart kann das Sicherungselement die Sicherungsscheibe verriegeln. Auf diese Weise ist die erforderliche Wirkverbindung zwischen der Sicherungseinrichtung und der Verstelleinrichtung gewährleistet.

Die Sicherungseinrichtung kann ein Federelement aufweisen, und das Sicherungselement kann um einen Drehpunkt drehbar gelagert sein und durch das Federelement in der ersten Betriebsart gehalten werden.

Die Sicherungseinrichtung kann des Weiteren eine Entriegelungseinrichtung aufweisen, und es kann die Sicherungseinrichtung bei Betätigung der Entriegelungseinrichtung in die zweite Betriebsart versetzt werden, wobei sie nach der Betätigung selbsttätig mittels des Federelements in die erste Betriebsart zurückkehrt.

Das Sicherungselement der Sicherungseinrichtung kann mit der Entriegelungseinrichtung mittels eines Seilzugs oder eines Bowdenzugs verbunden sein.

Die Verstelleinrichtung kann an dem zumindest einen Klappteil mittels einer einen Gelenkbolzen aufweisenden Gelenkanordnung beweglich verbunden sein, und die Sicherungseinrichtung kann ein Sicherungselement aufweisen, wobei in der ersten Betriebsart das Sicherungselement den Gelenkbolzen verriegelt.

Dem Betätigungszylinder wird von außen ein unter Druck stehendes Fluid zugeführt, wobei die Entriegelungseinrichtung ausgebildet sein kann, die Fluidzufuhr in der ersten Betriebsart der Sicherungseinrichtung zu verhindern und in der zweiten Betriebsart freizugeben. Auf diese Weise kann weitere Sicherheit vorgesehen sein, da der Zylinder vor einer Entriegelung nicht betätigt werden kann.

Die Sicherungseinrichtung kann ein Sicherungselement aufweisen, das mittels Schwerkraft oder mittels Federkraft in Richtung der zweiten Betriebsart der Sicherungseinrichtung vorgespannt ist. Eine Vorspannung mittels der Schwerkraft ist vorteilhaft, weil diese Vorspannung stets wirksam ist und nicht ausgesetzt werden kann. Wird das Sicherungselement sowohl mittels einer Federkraft als auch mittels der Schwerkraft vorgespannt, kann die Vorspannung bei einem Ausfall der Feder immer noch durch die Schwerkraft erreicht werden.

Der Betätigungszylinder weist einen ersten und bzw. oder zweiten Endanschlag auf, um die Bewegung des Sicherungselements in einer Richtung oder in beiden Richtungen zu begrenzen. Hierdurch kann vermieden werden, dass das Sicherungselement nach oben über seinen oberen Scheitelpunkt hinweg kippt oder nach unten in seinen unteren Scheitelpunkt schwingen kann und aufgrund der Schwerkraft entgegen der ersten Betriebsart bewegt, gehalten oder vorgespannt wird. In anderen Worten soll durch einen oder zwei Endanschläge bewirkt werden, dass sich das Sicherungselement nur in einem bestimmten Bereich bewegen kann, in dem sichergestellt ist, dass das Sicherungselement seine Funktion ausüben kann.

Die Federkraft wird durch eine Spiralfeder zwischen dem Sicherungselement und dem Betätigungszylinder ausgeübt. Die Verwendung einer Spiralfeder ist vorteilhaft, da sie eine kompakte Bauweise und geschlossene Bauweise aufweist, d.h. keine Zwischenräume zwischen den Windungen der Feder aufweist, in die eine Person hineingreifen und verletzt werden könnte. Auch können Gegenstände durch diese Bauweise davor bewahrt werden, in Zwischenräume der Windungen zu gelangen, wodurch die Feder beschädigt oder in ihrer Funktionsweise behindert werden könnte.

Es kann die Sicherungseinrichtung ferner in der Weise ausgebildet sein, dass bei dem Versetzten des zumindest einen Klappteils von der Arbeitsposition in die Grundposition das Sicherungselement die Verstelleinrichtung selbsttätig wieder verriegelt.

Das Sicherungselement ist an dem Betätigungszylinder angeordnet.

Die vorliegende Erfindung wird nachstehend anhand von Ausführungsbeispielen unter Bezugnahme auf die Zeichnung näher beschrieben. Es zeigen:
- Figur 1: eine schematische Darstellung eines mehrteiligen Bodenbearbeitungsgeräts gemäß einem ersten Ausführungsbeispiel der vorliegenden Erfindung in einem zusammengeklappten Zustand,
- Figur 2: eine schematisch Darstellung des mehrteiligen Bodenbearbeitungsgeräts in einem weiteren zusammengeklappten Zustand, der unterschiedlich ist zu der in Figur 1 gezeigten Anordnung,
- Figur 3: eine schematische Darstellung der Anordnung des Bodenbearbeitungsgeräts gemäß den Figuren 1 und 2 in einem teilweise aufgeklappten Zustand, und
- Figur 4: eine schematische Darstellung der Anordnung eines Sicherungselements gemäß einem zweiten Ausführungsbeispiel.
- Figur 5: zeigt eine Darstellung eines Fahrzeugs mit einem erfindungsgemäßen Bodenbearbeitungsgerät im Einsatz.
- Figur 6: zeigt eine Darstellung eines Fahrzeugs mit einem erfindungsgemäßen Bodenbearbeitungsgerät in einer eingeklappten Stellung.
- Figur 7: zeigt eine weitere Darstellung eines Fahrzeugs mit einem erfindungsgemäßen Bodenbearbeitungsgerät in einer eingeklappten Stellung.
- Figur 8: zeigt eine Darstellung eines Fahrzeugs mit einem erfindungsgemäßen Bodenbearbeitungsgerät in einer weiteren eingeklappten Stellung.

- Figur 9: zeigt eine Darstellung eines Fahrzeugs mit einem weiteren erfindungsgemäßen Bodenbearbeitungsgerät in einer eingeklappten Stellung.
- Figur 10: zeigt eine Darstellung eines erfindungsgemäßen Bodenbearbeitungsgeräts in einer eingeklappten Stellung.
- Figur 11: zeigt eine detailliertere Darstellung eines erfindungsgemäßen Bodenbearbeitungsgeräts in einer eingeklappten Stellung.
- Figur 12: zeigt eine detaillierte Darstellung der Sicherungseinrichtung des erfindungsgemäßen Bodenbearbeitungsgeräts in einer eingeklappten Stellung.
- Figur 13: zeigt eine weitere detaillierte Darstellung der Sicherungseinrichtung des erfindungsgemäßen Bodenbearbeitungsgeräts in einer eingeklappten Stellung.

### Erstes Ausführungsbeispiel

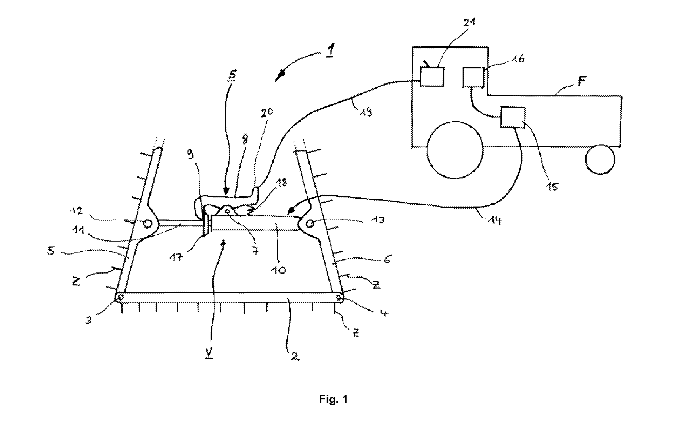

Figur 1 zeigt in einer schematischen und vereinfachten Darstellung eine Seitenansicht eines Bodenbearbeitungsgeräts 1 gemäß einem ersten Ausführungsbeispiel, das sich in einem zusammengeklappten Zustand befindet. Das Bodenbearbeitungsgerät 1 ist mehrteilig ausgeführt, beispielsweise in Form einer mehrteiligen Egge. Die vorliegende Erfindung ist jedoch nicht auf ein Bodenbearbeitungsgerät in Form einer Egge beschränkt, da die nachstehend im Einzelnen beschriebene Anordnung bei jedem in der Landwirtschaft oder dem Gartenbau nutzbaren Gerät angewendet werden kann, wenn dieses zumindest ein nach der Seite oder nach hinten abklappbares Teil umfasst.

Das Bodenbearbeitungsgerät 1 umfasst einen mittleren Arbeitsbereich, der ein Hauptteil 2 bildet. Das Hauptteil 2 kann vereinfacht beispielsweise in Form eines rechteckigen oder quadratischen Rahmens vorgesehen sein, an dem in vorbestimmter Länge und in vorbestimmter Anordnung an (nicht gezeigten) Zwischenelementen innerhalb des Rahmens Zinken Z befestigt sind, die sich nach unten, d.h. in Richtung der zu bearbeitenden Bodenoberfläche (beispielsweise eines Ackerbodens) erstrecken. In der in Figur 1 gezeigten Seitenansicht sind an dem rechten und linken Rahmenende des Hauptteils 2 jeweils ein linkes und ein rechtes Gelenk 3 und 4 angeordnet, mittels dessen jeweils Klappteile des mehrteiligen Bodenbearbeitungsgeräts 1 in beweglicher und damit klappbarer Weise angeordnet sind. Im Einzelnen ist mittels des linken Gelenks 3 ein erstes Klappteil 5 und mittels des rechten Gelenks 4 ein zweites Klappteil 6 beweglich angeordnet. Das Bodenbearbeitungsgerät 1 weist somit zumindest ein Klappteil 5, 6 auf.

In gleicher Weise wie das Hauptteil 2 sind an dem ersten und zweiten Klappteil 5 und 6 Zinken Z angeordnet, die sich ebenfalls in Richtung der zu bearbeitenden Bodenoberfläche erstrecken, wenn das erste und zweite Klappteil 5 und 6 derart ausgehend von der Darstellung in Figur 1 nach unten geklappt werden, dass in der Seitenansicht die beiden Klappteile 5 und 6 und das Hauptteil 2 im Wesentlichen eine Linie bilden und somit sämtliche Arbeitsbereiche des mehrteiligen Bodenbearbeitungsgeräts 1 auf der zu bearbeitenden Bodenoberfläche aufliegen und die jeweiligen Zinken Z in einem vorbestimmten Maß in den Boden eindringen, um die Glättungswirkung von Erdschollen zu erreichen. Mittels der mehrteiligen Anordnung des Bodenbearbeitungsgeräts 1 wird auch bei leichten Unebenheiten der Bodenoberfläche eine überwiegend flächige Auflage des Bodenbearbeitungsgeräts erreicht, da die drei Arbeitsbereiche (Hauptteil und erster und zweiter Klappteil) relativ zueinander mittels der Gelenke 3 und 4 beweglich sind.

Die in Figur 1 gezeigte Anordnung stellt somit die Position des ersten und zweiten Klappteils 5 und 6 im zusammengeklappten Zustand dar, wobei diese Anordnung geeignet ist, bei einer Befestigung des Bodenbearbeitungsgeräts 1 an einem Fahrzeug F (Figur 1) über öffentliche Straßen und Wege transportiert zu werden. Der zusammengeklappte Zustand gemäß Figur 1 stellt somit eine Transportstellung oder Transportanordnung des mehrteiligen Bodenbearbeitungsgeräts 1 dar. Diese Anordnung gemäß Figur 1 kann auch als eine Grund- oder Ruheposition betrachtet werden.

Das mehrteilige Bodenbearbeitungsgerät 1 umfasst desweiteren eine Sicherungseinrichtung S, die nachstehend im Einzelnen beschrieben wird. Die Sicherungseinrichtung S dient zur Verhinderung, dass in Folge einer technischen Störung oder einer Fehlbedienung durch einen Benutzer unerwünscht und insbesondere zu einem ungünstigen Zeitpunkt während des Transports des mehrteiligen Bodenbearbeitungsgeräts 1 auf öffentlichen Straßen oder Wegen der erste und zweite Klappteil 5 und 6 oder zumindest ein Klappteil 5 oder 6 heruntergeklappt und damit in die Arbeitsposition gebracht wird.

Die Sicherungseinrichtung S des mehrteiligen Bodenbearbeitungsgeräts 1 umfasst ein in einem Drehpunkt 7 gelagertes Sicherungselement 8, das an einer Seite (in der Darstellung von Figur 1 an der linken Seite) einen Hinterschnitt 9 aufweist, mittels dessen ein sperrender oder verriegelnder Eingriff mit einer Verstelleinrichtung V ermöglicht wird (Wirkverbindung). Die Verstelleinrichtung V umfasst einen Verstellzylinder 10, der nachstehend vereinfacht als Zylinder (Betätigungszylinder) bezeichnet wird, in den mit ihrem einen Ende eine Verstellstange 11 in Verbindung mit einem in dem Zylinder 10 angeordneten und nicht dargestellten Kolben hineinragt. Mit dem anderen Ende ist die Verstellstange 11 über ein drittes Gelenk (Gelenkanordnung) 12 mit dem ersten Klappteil 5 verbunden, und es ist mit seinem anderen Ende der Zylinder 10 über ein viertes Gelenk (Gelenkanordnung) 13 mit dem zweiten Klappteil 6 des mehrteiligen Bodenbearbeitungsgeräts 1 verbunden.

Der Zylinder ist vorzugsweise in Form eines Hydraulikzylinders vorgesehen, und erhält ein unter Druck stehendes Fluid über eine Hydraulikverbindung 14, die mittels eines Pfeils schematisch in Figur 1 dargestellt ist. Es ist hierbei unerheblich, an welcher Stelle und in welcher Form das unter Druck stehende Fluid zur Betätigung des Zylinders 10 zugeführt wird. Der Zylinder 10 ist vorzugsweise als ein doppelt wirkender Zylinder aufgebaut, und es können mittels des Zylinders 10 Zug- und Druckkräfte auf die Anordnung des Bodenbearbeitungsgeräts 1 in Abhängigkeit von der nachstehend noch beschriebenen auszuführenden Bewegung (in Richtung des Ausbreitens oder Zusammenklappens) ausgeübt werden. Eine Zuführung des Fluids ist daher an mehreren Stellen am Zylinder 10 erforderlich, sie ist jedoch vereinfacht lediglich durch die eine Hydraulikverbindung 14 veranschaulicht.

Im Falle des Zuführens eines unter Druck stehenden Fluides kann die Verstellstange 11 aus den Zylinder 10 herausgedrückt oder ausgehend von einer bestimmten Position weiter in den Zylinder 10 eingeschoben werden, so dass mittels des Zylinders 10 und der Verstellstange 11 die Möglichkeit gegeben ist, die beiden Klappteile 5 und 6 des mehrteiligen Bodenbearbeitungsgeräts 1 auszuklappen und in die Arbeitsanordnung oder Arbeitsposition zu bringen, oder die beiden Klappteile 5 und 6 zum Erreichen der Grundposition zusammenzuklappen, wie es in Figur 1 angedeutet ist. Die mit zumindest einem der Klappteile 5 oder 6 verbundene Verstelleinrichtung V dient somit zum Versetzten des zumindest einen Klappteils 5 oder 6 von einer Grundposition in eine Arbeitsposition und zurück.

Das Fahrzeug F umfasst zu diesem Zweck eine Hydraulikanlage 15, die entsprechend einem Antrieb durch einen nicht gezeigten Brennkraftmotor des Fahrzeugs F einen erforderlichen Hydraulikdruck für das Fluid bereitstellen kann. Mittels einer Betätigungseinrichtung 16 ist eine Bedienperson oder der Fahrer des Fahrzeugs F in der Lage, die Hydraulikanlage 15 zu aktivieren und damit das Bodenbearbeitungsgerät 1 in die Arbeitsposition zu bringen oder das erste und zweite Klappteil 5 und 6 gemäß Figur 1 einzuklappen. Die hierzu erforderliche Kraft bringt der Zylinder 10 (Betätigungszylinder) in Verbindung mit dem unter Druck stehenden Fluid und der Verstellstange 11 auf, wobei dem Zylinder 10 von außen (vom Fahrzeug F) über die Hydraulikverbindung 14 das Fluid zugeführt wird.

An der Verstellstange 11 der Verstelleinrichtung V ist eine Sicherungsscheibe 17 befestigt und gegen eine Verschiebung auf der Verstellstange 11 gesichert. Die Sicherungsscheibe 17 ist an einer derartigen Position auf der Verstellstange 11 angeordnet, dass sie sich in der Nähe des Endes des Zylinders 10 befindet, aus dem die Verstellstange 11 herausragt, wenn die beiden Klappteile 5 und 6 bis zu ihrer Grundposition oder Ruheposition eingeklappt sind (Figur 1).

Befindet sich die Sicherungsscheibe 17, wie es in Figur 1 angedeutet ist, durch die Anordnung der Klappteile 5 und 6 in der Nähe des einen Endes des Zylinders 10, dann ermöglicht diese Position der Sicherungsscheibe 17 einen Eingriff mit dem Hinterschnitt 9 des Sicherungselements 8. Das an dem Zylinder 10 um den Drehpunkt 7 beweglich angeordnete Sicherungselement 8 steht somit in Eingriff mit der Sicherungsscheibe 17, sodass sich in Abhängigkeit von diesem Eingriff die Sicherungsscheibe 17 und damit die Verstellstange 11 nicht weiter aus dem Kolben 10 heraus bewegen kann (Wirkverbindung). Eine Bewegung in der Richtung nach links in Figur 1 ist somit gesperrt bzw. verriegelt. Diese Anordnung der Sicherungseinrichtung S stellt eine erste Betriebsart dar.

Die Sicherungseinrichtung weist ferner eine Federeinrichtung 18 auf, mit der das Sicherungselement 8 durch den Federdruck entgegen dem Uhrzeigersinn um den Drehpunkt 7 der Sicherungseinrichtung S gedrückt bzw. vorgespannt wird. Die Sicherungsscheibe 17 kann somit in Verbindung mit der Federeinrichtung 18 stabil hinter dem Hinterschnitt 9 des Sicherungselements 8 angeordnet sein, so dass auch bei mechanischen Schwingungen bei dem Transportieren des Bodenbearbeitungsgeräts 1 mittels des Fahrzeugs F ein sicheres Festhalten der Verstellstange 11 mit der Sicherungsscheibe 17 und damit ein sicheres Halten der beiden Klappteile 5 und 6 in dem eingeklappten Zustand gewährleistet ist. Das Sicherungselement 8 wird somit durch die Federeinrichtung 18 vorgespannt, dass die erste Betriebsart stabil eingenommen wird. Die erforderliche Wirkverbindung zwischen der Sicherungseinrichtung S und der Verstelleinrichtung V ist hierdurch gewährleistet

Die Sicherungseinrichtung S umfasst desweiteren eine Entriegelungsverbindung 19, die einerseits mit einem in Figur 1 gezeigten Ende 20 des Sicherungselements 8 verbunden und andererseits zu einer Entriegelungseinrichtung 21 führt, die in dem Fahrzeug F und vorzugsweise in dem Führerhaus desselben angeordnet ist.

Wird die Entriegelungseinrichtung 21 durch den Benutzer oder Fahrer des Fahrzeugs betätigt, dann wird das Sicherungselement 8 im Uhrzeigersinn um den Drehpunkt 7 entgegen der Vorspannungskraft der Federeinrichtung 18 gedreht, so dass der Hinterschnitt 9 des Sicherungselements 8 die Sicherungsscheibe 17 frei gibt. Der Zustand nach der Entriegelung der Sicherungseinrichtung S bzw. des Sicherungselements 8 (d. h. der entriegelte Zustand) stellt eine zweite Betriebsart der Sicherungseinrichtung S dar.

Wird nach der Entriegelung der Sicherungseinrichtung S in der vorstehend angegebenen Weise mittels der Entriegelungseinrichtung 21 die Sicherungsscheibe 17 und damit die Verstellstange 11 hinsichtlich ihrer Bewegungsmöglichkeit freigegeben, dann kann des Weiteren der Benutzer oder Fahrer im Führerstand die Betätigungseinrichtung 16 betätigen, worauf die Hydraulikanlage 15 aktiviert wird und die beiden Klappteile 5 und 6 des mehrteiligen Bodenbearbeitungsgeräts 1 in die Arbeitsstellung geklappt werden können. Dem Zylinder wird dann das erforderliche unter Druckstehendes Fluid von außen, d. h. von dem Fahrzeug F über die Hydraulikverbindung 14 zugeführt.

Wird hingegen, beispielsweise durch eine versehentliche Betätigung oder Fehlbedienung die Betätigungseinrichtung 16 betätigt, bevor oder ohne dass die Entriegelungseinrichtung 21 erfolgreich im Sinne einer Entriegelung der Sicherungsscheibe 17 betätigt wurde, dann kann die Verstellstange 11 einschließlich der Sicherungsscheibe 17 keine Bewegung durchführen, da eine Verriegelung durch den Hinterschnitt 9 des Sicherungselements 8 besteht (erste Betriebsart).

Es wird somit bei der versehentlichen Aktivierung der Hydraulikanlage 15 durch die Betätigung der Betätigungseinrichtung 16 versucht, eine Bewegung der beiden Klappteile 5 und 6 einzuleiten, wobei diese Bewegung jedoch nicht ausgeführt werden kann in Folge der Verriegelung durch die Sicherungseinrichtung S bzw. den Sicherungselement 8. Die Verriegelung entspricht der ersten Betriebsart der Sicherungseinrichtung S.

In gleicher Weise verhindert die Verriegelung durch die Sicherungseinrichtung S ein selbsttätiges Lösen und eine Bewegung der Verstellstange 11 in Verbindung mit der Sicherungsscheibe 17 in Folge von Erschütterungen des mehrteiligen Bodenbearbeitungsgeräts 1, wenn dieses mittels des Fahrzeugs F auf (unebenen) öffentlichen Straßen und Wegen transportiert wird. Die Sicherungseinrichtung S gewährleistet somit ein hohes Maß an Sicherheit zur Vermeidung eines unbeabsichtigten oder durch eine Fehlbedienung eingeleiteten Auseinanderklappens der zuvor zusammengeklappten Klappteile 5 und 6 des Bodenbearbeitungsgeräts 1. Die Entriegelung kann bei Bedarf vom Führerhaus des Fahrzeugs F aus in der Art einer Fernbedienung zur bewussten Einleitung einer Bewegung der Klappteile 5 und 6 vorgenommen werden.

In der Darstellung gemäß Figur 1 ist seitens der Hydraulikanlage 15 und des Zylinders 10 in Verbindung mit der Verstellstange 11 das Aufbringen einer Kraft erforderlich, um die beiden Klappteile 5 und 6 des Bodenbearbeitungsgeräts 1 aus ihrer Grundposition oder Transportposition (Transportanordnung) herauszubringen und in die Arbeitsposition zu bewegen, da die Klappteile 5 und 6 zur Mitte des Hauptteils 2 in ihrer Grundposition geneigt sind.

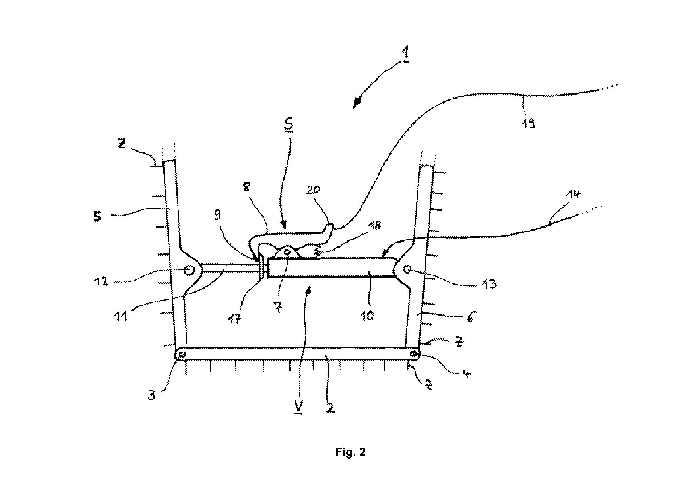

In der Darstellung gemäß Figur 2 liegt im Wesentlichen die gleiche Anordnung vor, wobei zur Vereinfachung das Fahrzeug F weggelassen ist. In Figur 2 ist jedoch die Ruhestellung bzw. der eingeklappte Zustand der beiden Klappteile 5 und 6 nicht in der Weise vorgesehen, wie es in Figur 1 gezeigt ist, sondern es stehen die beiden Klappteile 5 und 6 annähernd senkrecht oder sind um einen geringen Betrag in Richtung des Klappens zur Arbeitsposition relativ zur senkrechten Lage versetzt.

In diesem Fall befindet sich die Sicherungsscheibe 17 im Vergleich zur Darstellung von Figur 1 an einer leicht geänderten Position auf der Verstellstange 11, wobei jedoch ebenfalls die Bedingung erfüllt ist, dass in der Ruheposition oder der eingeklappten Position der beiden Klappteile 5 und 6 die Sicherungsscheibe 17 zur Bereitstellung der Sicherungsfunktion zwischen dem einen (linken) Ende des Zylinders 10 und dem Hinterschnitt 9 des Sicherungselements 8 angeordnet ist.

Es ergeben sich mit der in Figur 2 gezeigten alternativen Anordnung die gleichen Sicherheitsaspekte, wie sie vorstehend in Verbindung mit der Anordnung gemäß Figur 1 angegeben sind. Im Unterschied zu der Anordnung gemäß Figur 1 bedarf es jedoch keiner oder lediglich einer geringen Kraft, die von dem Zylinder 10 und der Hydraulikanlage 15 aufgebracht werden muss, um die beiden Klappteile 5 und 6 in die Arbeitsposition zu bringen. In der in Figur 2 gezeigten Anordnung besteht die Möglichkeit, dass mittels des Zylinders 10 und dem mit der Verstellstange 11 verbundenen (nicht gezeigten) Kolben im Zylinder 10 das Herunterklappen der beiden Klappteile 5 und 6 in die Arbeitsposition auf einfache Weise und mit einer gesteuerten Dämpfung entgegen der Schwerkraft erfolgen kann.

Mittels der Kraft der Federeinrichtung 18 erfolgt in gleicher Weise wie bei der in Verbindung mit Figur 1 beschriebenen Anordnung ein Vorspannen des Sicherungselements 8 entgegen dem Uhrzeigersinn in den Figuren 1 und 2, so dass auch bei der Anordnung gemäß Figur 2 ein sicheres Festhalten der Sicherungsscheibe 17 durch den Hinterschnitt 9 des Sicherungselements 8 gewährleistet ist und somit auch bei starken Erschütterungen oder Vibrationen ein ungewolltes Lösen der Sicherungsscheibe 17 von dem Sicherungselement 8 nicht möglich ist. Vielmehr erfolgt eine Entriegelung mittels der Entriegelungseinrichtung 21 (über die Entriegelungsverbindung 19) durch den Benutzer oder Fahrer. Die Entriegelung kann somit in bequemer Weise aus dem Führerhaus des Fahrzeugs F vorgenommen werden, ohne dass der Benutzer oder Fahrer das Fahrzeug verlassen muss.

Die Entriegelungsverbindung 19 kann in Form eines Seilzugs oder auch eines Bowdenzugs vorgesehen sein, wobei mittels dieser Einrichtungen die Entriegelung aus dem Führerhaus durch Betätigung der Entriegelungseinrichtung 21 vorgenommen werden kann. Es ist möglich, dass lediglich eine Zugkraft in einer Richtung auf das Sicherungselement 8 zur Entriegelung ausgeübt werden kann, da das Sicherungselement 8 selbsttätig mittels der Vorspannung der Federeinrichtung 18 in seine Ausgangslage, d.h. in die verriegelte Lage zurückkehrt, sofern sich die Sicherungsscheibe 17 hinter dem Hinterschnitt 9 befindet. Die Verriegelung als die erste Betriebsart der Sicherungseinrichtung S stellt somit einen stabilen Betriebszustand dar, während der Entriegelungszustand nur bei der Betätigung der Entriegelungseinrichtung 21 und daher bedienungsabhängig zeitweilig vorliegt.

Die Sicherungsscheibe 17 kann in der Weise aufgebaut sein, dass eine Schräge am äußeren Umfangsrand in der Weise ausgebildet ist, dass die Sicherungsscheibe 17, wenn sie sich bei der Zusammenklappbewegung der beiden Klappteile 5 und 6 dem einen Ende des Zylinders 10 nähert, selbsttätig das um den Drehpunkt 7 bewegliche Sicherungselement 8 nach oben bewegt und zwischen dem Zylinder 10 und dem Hinterschnitt 9 einrastet. Ist der Einrastvorgang beendet und befindet sich die Sicherungsscheibe 17 gemäß der Darstellung in den Figuren 1 und 2 hinter dem Hinterschnitt 9, dann ist die Sicherheitsfunktion gewährleistet.

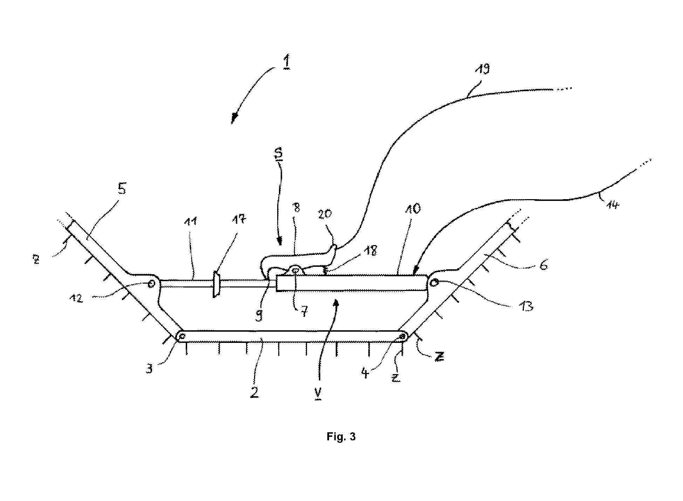

Im Gegensatz zu der Darstellung in den Figuren 1 und 2 zeigt Figur 3 die aus den vorherigen Figuren bekannte Anordnung in der Betriebssituation, dass mit der Betätigung der Entriegelungseinrichtung 21 zur Entriegelung der Sicherungsscheibe 17 und der anschließenden Aktivierung der Hydraulikanlage 15 die beiden Klappteile 5 und 6 des Bodenbearbeitungsgeräts 1 bereits weitgehend umgeklappt sind und nach einer weiteren Zeit der Bewegung auf dem zu bearbeitenden Boden aufliegen werden. Die Sicherungsscheibe 17 befindet sich somit nicht mehr hinter dem Hinterschnitt 9 des Sicherungselements 8, so dass die Sicherungsscheibe 17 durch die mögliche Bewegung in Verbindung mit der Verstellstange 11 die vorbestimmte Bewegung zum Ausklappen der beiden Klappteile 5 und 6 freigeben kann. Die in Figur 3 gezeigten Bauteile sind die gleichen wie in den Figuren 1 und 2.

Bewegt sich gemäß Figur 3 bei dem anschließenden Zusammenklappen der beiden Klappteile 5 und 6 die Sicherungsscheibe 17 in Verbindung mit einem Betrieb des Zylinders 10 nach rechts, dann rastet die Sicherungsscheibe 17 wieder hinter den Hinterschnitt 9 des mittels der Federeinrichtung 18 vorgespannten Sicherungselements 8 ein, so dass danach wieder die Sicherungsfunktion gewährleistet ist (erste Betriebsart der Sicherungseinrichtung S). Eine erneute Bewegung der Sicherungsscheibe 17 nach links ist danach nur nach einer vorherigen Entriegelung (zweite Betriebsart der Sicherungseinrichtung S) und nach Betätigung der Betätigungseinrichtung 16 möglich.

### Zweites Ausführungsbeispiel

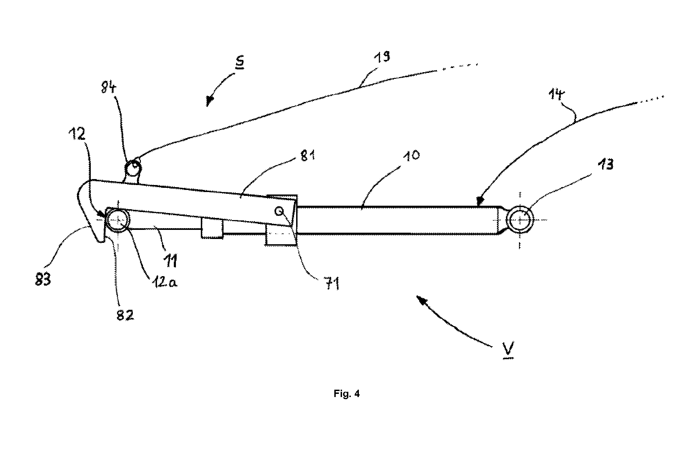

Figur 4 zeigt ein zweites Ausführungsbeispiel des Sicherungselements 8 gemäß den Figuren 1 bis 3. In den Figuren 1 bis 3 war das Sicherungselement 8 in der Weise vorgesehen, dass dieses um den Drehpunkt 7 drehbar gelagert und mittels der Vorspannung der Federeinrichtung 18 im Gegenuhrzeigersinn gedrückt wird. Auf diese Weise wird mittels des Hinterschnitts 9 der Sicherungseinrichtung S die Sicherungsfunktion bewirkt, indem die Sicherungsscheibe 17 zwischen dem einen Ende des Zylinders 10 und dem Hinterschnitt 9 des Sicherungselements 8 angeordnet ist (erste Betriebsart). Die Vorspannungskraft der Federeinrichtung 18 dient zu einem sicheren Einrasten der Sicherungsscheibe 17 und Festhalten derselben an dieser Position.

Gemäß dem zweiten Ausführungsbeispiel von Figur 4 ist ein Sicherungselement 81 vorgesehen, das mittels eines Drehpunkts 71 an dem Zylinder 10 drehbar gelagert ist. Der Drehpunkt 71 ist in der Nähe des äußeren Endes des Zylinders 10 angeordnet, in welchem die Verstellstange 11 beweglich und insbesondere verschiebbar eingesetzt ist. Mit seinem anderen Ende ist der Zylinder 10 über das vierte Gelenk (Gelenkanordnung) 13 mit dem zweiten Klappteil 6 drehbar verbunden. Diese Anordnung entspricht somit im Wesentlichen der Anordnung der Figuren 1 bis 3. In Figur 4 sind zur Vereinfachung der Darstellung die Klappteile 5 und 6 nicht gezeigt.

Im Vergleich zu der Anordnung der Figuren 1 bis 3 weist jedoch das Sicherungselement 81 eine zu dem Sicherungselement 8 unterschiedliche Ausgestaltung auf. Das Sicherungselement 81 gemäß dem zweiten Ausführungsbeispiel ist an seinem einem Ende mittels des Drehpunkts 71 drehbar gelagert, während an seinem anderen Ende ein Hinterschnitt 82 gebildet wird. Die Verstellstange 11 ist in gleicher Weise wie beim ersten Ausführungsbeispiel mittels des dritten Gelenks (Gelenkanordnung) 12 mit dem ersten Klappteil 5 drehbar verbunden. Hierbei ist jedoch ein Gelenkbolzen 12a vorgesehen, der aus dem Bereich des dritten Gelenks 12 derart herausragt, dass er in Eingriff mit dem Hinterschnitt 82 des Sicherungselements 81 (Fallhaken) gelangen kann. Durch eine Abschrägung 83 an der freien (in Figur 4 linken) Seite des Sicherungselements 81 kann bei dem Zusammenklappen der Klappteile 5 und 6 in ähnlicher Weise wie bei dem ersten Ausführungsbeispiel ein selbsttätiges Einrasten des Gelenkbolzens 12a hinter den Hinterschnitt 82 erfolgen.

Gemäß der Darstellung in Figur 4 besteht somit die Möglichkeit, die Klappteile 5 und 6 im zusammengeklappten Zustand zu verriegeln, indem in dieser Betriebssituation der Gelenkbolzen 12a nach einer Bewegung in Richtung des Kolbens 10 während des Zusammenklappens der Klappteile 5 und 6 in Eingriff mit dem Hinterschnitt 82 des Sicherungselements 81 gelangt. Das Sicherungselement 81 wird mittels seiner Schwerkraft oder mittels einer entsprechenden Federkraft einer (nicht gezeigten) Feder nach unten bewegt, wobei das Sicherungselement 81 durch die Vorspannung auf dem Gelenkbolzen 12a aufliegt und diesen in der vorliegenden Position verriegelt. Hierbei wird die gleiche Sicherungsfunktion erreicht, wie sie mit der Anordnung gemäß den Figuren 1 bis 3 des ersten Ausführungsbeispiels erreicht wird. Es stellt dies ebenfalls die erste Betriebsart der Sicherungseinrichtung S dar, bei der eine Wirkverbindung zwischen der Sicherungseinrichtung S und der Verstelleinrichtung V besteht.

Zur Entriegelung des Gelenkbolzens 12a und somit zur Freigabe einer Bewegung der Verstellstange 11 und damit der Klappteile 5 und 6 ist die Entriegelungsverbindung 19 vorgesehen, die einerseits mit dem Sicherungselement 81 verbunden ist und andererseits in das Führerhaus des Fahrzeugs F zu der Entriegelungseinrichtung 21 geführt ist. Mittels der Entriegelungseinrichtung 21 und der Entriegelungsverbindung 19, die gemäß Figur 4 und in Verbindung mit Figur 1 über ein Befestigungselement 84 mit dem Sicherungselement 81 verbunden ist, kann somit der Gelenkbolzen 12a relativ zum Sicherungselement 81 entriegelt und zur Bewegung freigegeben werden (zweite Betriebsart der Sicherungseinrichtung S).

Der Benutzer kann nach der Entriegelung unmittelbar die Betätigungseinrichtung 16 zur Aktivierung der Hydraulikanlage 15 und zur Einleitung der Bewegung zum Ausklappen der Klappteile 5 und 6 aktivieren.

Mittels der Anordnung gemäß dem zweiten Ausführungsbeispiel und der Darstellung in Figur 4 werden die gleichen Sicherheitsfunktionen erreicht wie mit der Anordnung gemäß dem ersten Ausführungsbeispiel, wobei jedoch gemäß dem zweiten Ausführungsbeispiel auf die Anordnung einer Sicherungsscheibe, wie der Sicherungsscheibe 17 gemäß den Figuren 1 bis 3, verzichtet werden kann, während gemäß Figur 4 der Gelenkbolzen 12a des dritten Gelenks bzw. der Gelenkanordnung 12 in der Weise ausgebildet ist, dass er mittels des Hinterschnitts 82 des Sicherungselements 81 wirksam und sicher verriegelt werden kann.

Die sichere Verriegelung ist gewährleistet durch die Anlage des Sicherungselements 81 an dem Gelenkbolzen 12a mittels Schwerkraft oder mittels einer entsprechenden Federbelastung, sodass auch bei starkem Rütteln oder Schwingen der gesamten Anordnung des Bodenbearbeitungsgeräts 1 die Sicherheitsfunktion gewährleistet ist.

Gemäß dem zweiten Ausführungsbeispiel ist bezüglich der Entriegelungsverbindung 19 9 lediglich mittels der Entriegelungseinrichtung 21 eine Zugkraft auf das Sicherungselement 81 auszuüben, sodass die Verriegelung gelöst und der Hinterschnitt 82 des Sicherungselements den Gelenkbolzen 12a des dritten Gelenks 12 freigeben kann.

Gemäß einem weiteren Ausführungsbeispiel ist die Entriegelungseinrichtung 21 zur Entriegelung des Sicherungselements 8 oder 81 zusätzlich in der Weise ausgebildet, dass die Ausübung der Kraft mittels der Entriegelungsverbindung 19 über einen mechanischen Hebel erfolgt. Der Bediener oder Fahrer im Führerhaus des Fahrzeugs F übt dabei mittels einer Hebelbewegung die Kraft über die Entriegelungsverbindung 19 auf das jeweilige Sicherungselement 8 oder 81 aus.

Die Entriegelungseinrichtung 21 kann ferner ebenfalls in Wirkverbindung mit einer Betätigung der Entriegelungsverbindung 19 die Betätigung einer elektrischen Einrichtung umfassen, die derart ausgebildet ist, dass in den Fällen der Nicht-Betätigung der Entriegelungseinrichtung 21 eine Betätigung der Betätigungseinrichtung 16 zum Aktivieren der Hydraulikanlage zum Abklappen der beiden Klappteile 5 und 6 wirkungslos bleibt. In diesem Falle bilden die zugehörigen elektrischen Schalteinrichtungen eine UND-Funktion, sodass lediglich eine Betätigung der Betätigungseinrichtung 16 wirksam wird, wenn gleichzeitig die Entriegelungseinrichtung sowohl zum Entriegeln des Sicherungselements 8 oder 81 als auch zum Freigeben einer Aktivierung der Hydraulikanlage 15 vorliegt. In anderen Fällen bleibt die Betätigung der Betätigungseinrichtung 16 wirkungslos, sodass auch bei einer versehentlichen Betätigung keine Bewegung der beiden Klappteile 5 und 6 aus ihrer Grundposition oder zusammengeklappten Position erfolgt.

Des Weiteren umfasst alternativ die Entriegelungseinrichtung 21 eine transparente oder undurchsichtige Abdeckeinrichtung, mit der die Betätigungseinrichtung 16 im Führerhaus des Fahrzeugs F in der ersten Betriebsart der Sicherungseinrichtung S abgedeckt wird. Die Abdeckeinrichtung steht somit in Wirkverbindung mit der Betätigungseinrichtung 16. Betätigt der Benutzer oder Fahrer die Entriegelungseinrichtung 21 zur Entriegelung des Sicherungselements 8 oder 81 (zweite Betriebsart), dann wird gleichzeitig die Betätigung der Betätigungseinrichtung 16 möglich, da diese nun nicht mehr verdeckt ist. In den übrigen Zeiten der Nicht-Betätigung der Entriegelungseinrichtung 21 kann die Betätigungseinrichtung 16 nicht betätigt werden, auch nicht versehentlich, da sie mittels der entsprechenden Abdeckung abgedeckt und damit nicht unmittelbar zugänglich ist.

Auf diese Weise kann analog einer UND-Funktion erreicht werden, dass zuerst eine mechanische Entriegelung vorgenommen wird, und danach mittels einer Tastenbetätigung (vorzugsweise) die Hydraulikanlage 15 aktiviert werden kann. Es wird auf diese Weise der Bediener oder Fahrer davor geschützt, die Hydraulikanlage versehentlich oder in Unkenntnis zu aktivieren. Da das Aktivieren der Hydraulikanlage 15 und somit das Abklappen der beiden Klappteile 5 und 6 zwei in einer vorbestimmten Reihenfolge zu bearbeitende Maßnahmen erfordert, ist eine versehentliche Betätigung weitgehend ausgeschlossen. Mit den vorstehend angegebenen Anordnungen und dem damit in Verbindung stehenden Verriegelungskonzept wird somit ein hohes Maß an Sicherheit gegen ein versehentliches Abklappen der Klappteile 5 und 6 des Bodenbearbeitungsgeräts 1 beispielsweise auf öffentlichen Straßen oder Wegen erreicht, ohne das die Bedienbarkeit erschwert wird. Die Unfallgefahr kann auf diese Weise erheblich vermindert werden. Ferner kann mittels der mechanischen Verriegelung auch der Zylinder 10 entlastet werden, da im verriegelten Zustand der Zylinder nicht mehr unter Druck stehen muss.

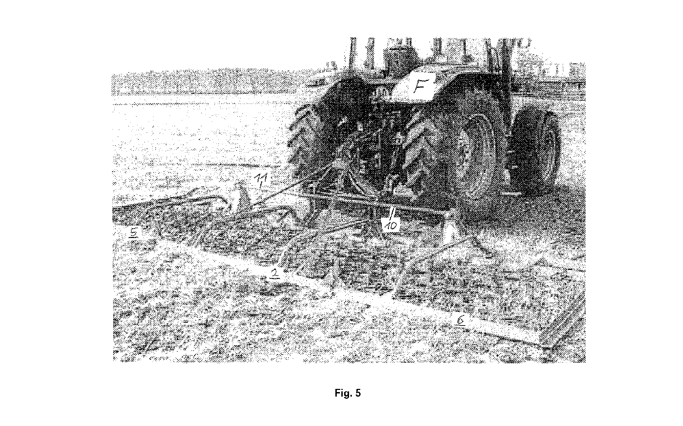

Figur 5 zeigt eine Darstellung eines Fahrzeugs F mit einem erfindungsgemäßen Bodenbearbeitungsgerät 1 im Einsatz. Dabei sind das erste und das zweite Klappteil 5, 6 auf dem Boden heruntergeklappt, so dass das erste und das zweite Klappteil 5, 6 zusammen mit dem mittig dazwischen angeordneten Hauptteil 2 einen gemeinsamen ebenen Arbeitsbereich zur Bodenbearbeitung bilden. Um das erste und das zweite Klappteil 5, 6 in Arbeitsposition zu bringen, sind der Zylinder 10 und die Verstellstange 11 der Verstelleinrichtung V auf eine entsprechende Länge zueinander ausgefahren.

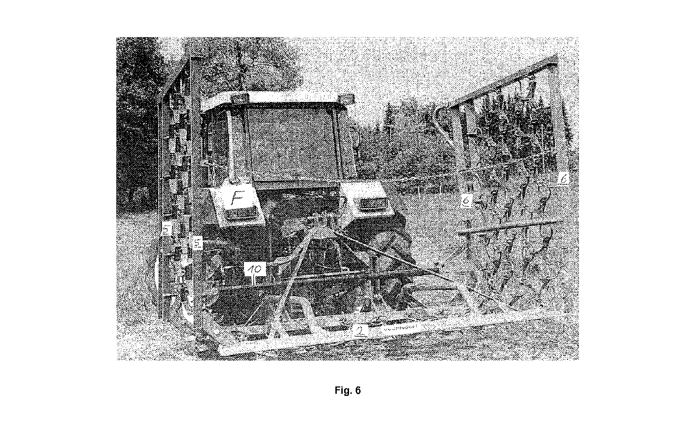

Figur 6 zeigt eine Darstellung eines Fahrzeugs F mit einem erfindungsgemäßen Bodenbearbeitungsgerät 1 in einer eingeklappten Stellung. Dabei sind das erste und das zweite Klappteil 5, 6 gegenüber dem Hauptteil 2 etwa senkrecht stehend zusammengeklappt. Der Zylinder 10 und die Verstellstange 11 der Verstelleinrichtung V sind auf eine entsprechende Länge zueinander eingefahren.

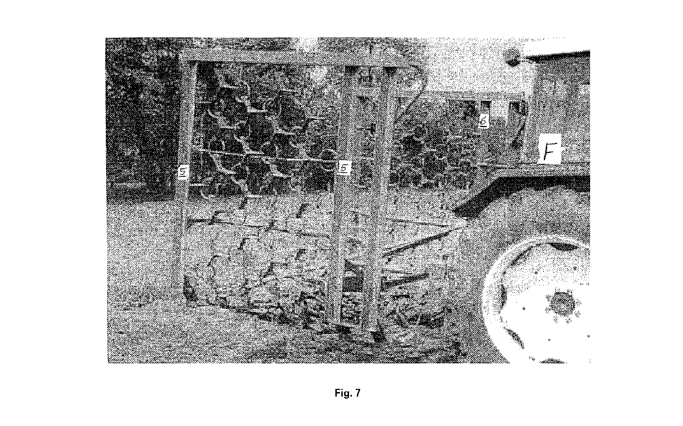

Figur 7 zeigt eine weitere Darstellung eines Fahrzeugs F mit einem erfindungsgemäßen Bodenbearbeitungsgerät 1 in einer eingeklappten Stellung.

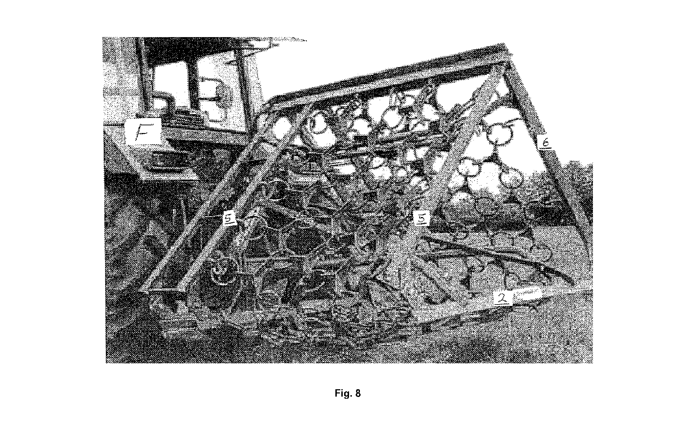

Figur 8 zeigt eine Darstellung eines Fahrzeugs F mit einem erfindungsgemäßen Bodenbearbeitungsgerät 1 in einer weiteren eingeklappten Stellung. Dabei sind das erste und das zweite Klappteil 5, 6 gegenüber dem Hauptteil 2 weiter über die senkrechte Stellung hinaus zusammengeklappt. Der Zylinder 10 und die Verstellstange 11 der Verstelleinrichtung V sind entsprechend weiter zueinander eingefahren.

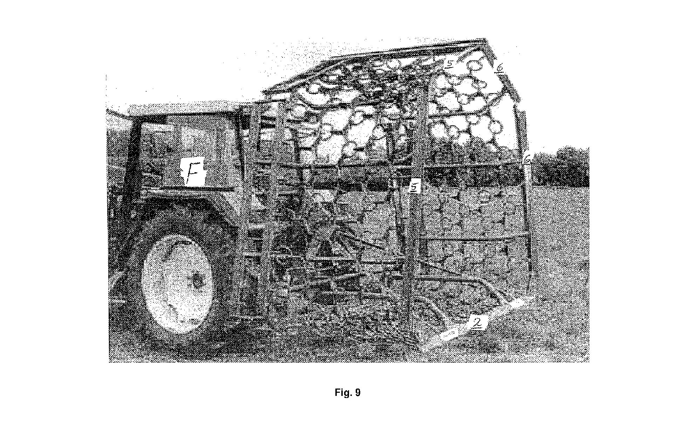

Figur 9 zeigt eine Darstellung eines Fahrzeugs F mit einem weiteren erfindungsgemäßen Bodenbearbeitungsgerät 1 in einer eingeklappten Stellung. Das erste und das zweite Klappteil 5, 6 weisen dabei jeweils zwei Segmente auf, die jeweils in einem unterschiedlichen Maße zueinander eingeklappt sind.

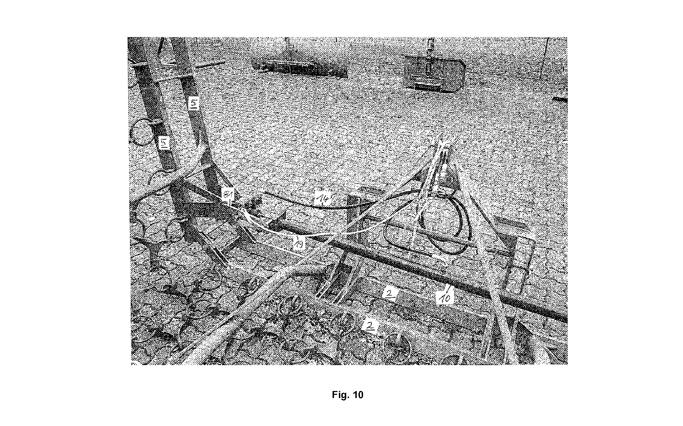

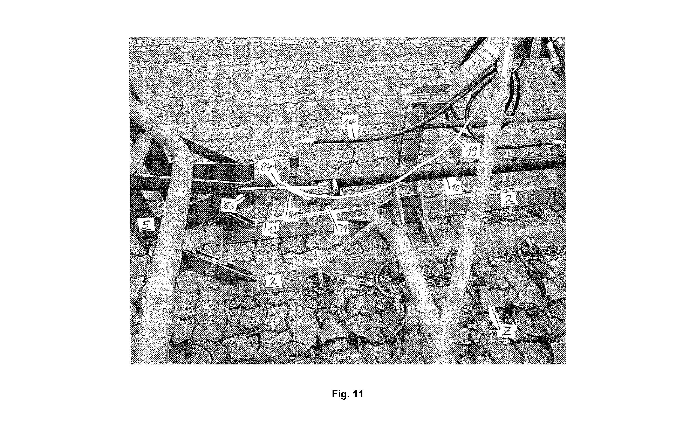

Figur 10 zeigt eine Darstellung eines erfindungsgemäßen Bodenbearbeitungsgeräts 1 in einer eingeklappten Stellung. Figur 11 zeigt eine detailliertere Darstellung eines erfindungsgemäßen Bodenbearbeitungsgeräts 1 in einer eingeklappten Stellung. In diesen Darstellungen der Figuren 10 und 11 sind das erste und das zweite Klappteil 5, 6 gegenüber dem Hauptteil 2 etwa senkrecht stehend zusammengeklappt.

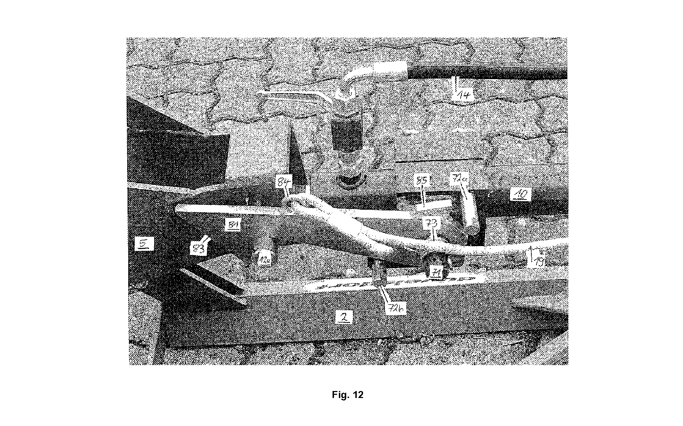

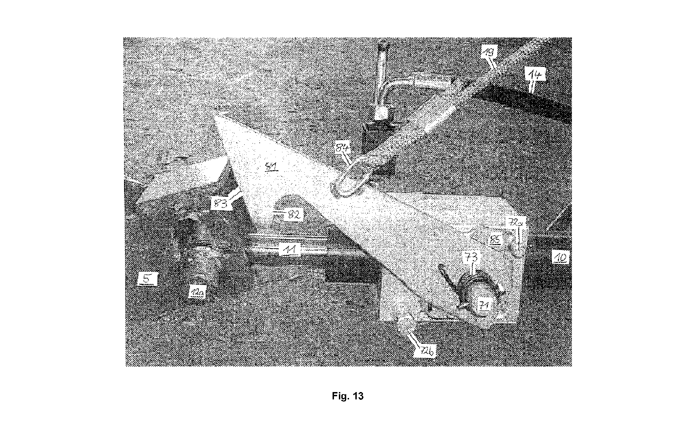

Figur 12 zeigt eine detaillierte Darstellung der Sicherungseinrichtung S des erfindungsgemäßen Bodenbearbeitungsgeräts 1 in einer eingeklappten Stellung. Figur 13 zeigt eine weitere detaillierte Darstellung der Sicherungseinrichtung S des erfindungsgemäßen Bodenbearbeitungsgeräts 1 in einer eingeklappten Stellung.

Dabei sind die Elemente der Figur 4 gezeigt. Dabei weist der Drehpunkt 71 zusätzlich zu der Darstellung der Figur 4 eine Spiralfeder 73 auf, die zylinderförmig um den Drehpunkt 71 angeordnet ist und zwischen dem Drehpunkt 71 - und damit dem Zylinder 10 - und dem Sicherungselement 81 eine Federkraft ausübt.

Ferner weist der Zylinder 10 einen ersten Anschlag 72a und einen zweiten Anschlag 72b auf, die so vorgesehen sind, die Drehbewegung des Sicherungselements 81 um den Drehpunkt 71 zu begrenzen, so dass das Sicherungselement 81 zwischen der Grundposition und der Arbeitsposition versetzbar ist, jedoch diesen Bereich nicht verlassen kann, damit beispielsweise das Sicherungselement 81 nicht über den oberen Scheitelpunkt seiner Drehbewegung hinweg klappen und in einem Bereich liegen bleiben kann, von dem es nicht mehr bestimmungsgemäß in die Grundposition oder Arbeitsposition gebracht werden kann.

Um mit dem ersten Anschlag 72a zusammenwirken zu können, weist das Sicherungselement 81 in der in den Figuren 12 und 13 gezeigten Ausführungsform einen Vorsprung 85 auf, der so an dem Sicherungselement 81 angeordnet ist, dass der Bewegungsbereich des Sicherungselements 81 um den Drehpunkt 71 so weit eingeschränkt wird, dass der Bereich der Grundposition und Arbeitsposition nicht verlassen werden kann.

Die vorliegende Erfindung wurde anhand von Ausführungsbeispielen in Verbindung mit den zugehörigen Figuren beschrieben.

Es ist jedoch für den auf diesem Gebiet tätigen Fachmann selbstverständlich, dass die Ausgestaltung der vorliegenden Erfindung gemäß den vorstehend beschriebenen Figuren und die für die jeweiligen Bauteile und Komponenten verwendeten Bezugszeichen der Figuren und der Beschreibung sowie die beispielhaften Angaben nicht einschränkend auszulegen sind. Die Erfindung ist daher auf die schematischen und vereinfachten Darstellungen der Figuren nicht beschränkt. Vielmehr werden als zur Erfindung gehörige sämtliche Ausführungsformen und Varianten angesehen, die unter die beigefügten Patentansprüche fallen.

## Patentansprüche

1. Mehrteiliges Bodenbearbeitungsgerät zur Bearbeitung eines Erdbodens, mit
einem Hauptteil (2), an dem zumindest ein Klappteil (5, 6) beweglich angeordnet ist,
einer mit dem zumindest einen Klappteil (5, 6) verbundenen Verstelleinrichtung (V), die einen Betätigungszylinder (10) und eine Verstellstange (11) aufweist, zum Versetzten des zumindest einen Klappteils (5, 6) von einer Grundposition in eine Arbeitsposition und zurück, und
einer zwei Betriebsarten aufweisenden Sicherungseinrichtung (S), die mit der Verstelleinrichtung (V) in Wirkverbindung steht und vorgesehen ist zum Verriegeln der Verstelleinrichtung (V) in einer ersten Betriebsart zur Vermeidung eines unerwünschten Versetzens des zumindest einen Klappteils (5, 6) in die Arbeitsposition, und zum Aufheben der Verriegelung (V) in der zweiten Betriebsart der Sicherungseinrichtung (S),
**dadurch gekennzeichnet, dass**
die Sicherungseinrichtung (S) zwischen dem Betätigungszylinder (10) und der Verstellstange (11) wirkt.

2. Bodenbearbeitungsgerät nach Anspruch 1,
wobei die Sicherungseinrichtung (S) die Verstelleinrichtung (V) in der ersten Betriebsart mechanisch verriegelt und das zumindest eine Klappteil (5, 6) lediglich in der zweiten Betriebsart der Sicherungseinrichtung (S) von der Grundposition in die Arbeitsposition versetzbar ist.

3. Bodenbearbeitungsgerät nach Anspruch 1,
wobei die Verstelleinrichtung (V) eine Sicherungsscheibe (17) aufweist, und die Sicherungseinrichtung (S) ein Sicherungselement (8) aufweist, und wobei in der ersten Betriebsart das Sicherungselement die Sicherungsscheibe verriegelt.

4. Bodenbearbeitungsgerät nach Anspruch 3,
wobei die Sicherungseinrichtung (S) ein Federelement (18) aufweist und das Sicherungselement (8) um einen Drehpunkt (7) drehbar gelagert ist und durch das Federelement in der ersten Betriebsart gehalten wird.

5. Bodenbearbeitungsgerät nach Anspruch 4,
wobei die Sicherungseinrichtung (S) eine Entriegelungseinrichtung (21) aufweist, und die Sicherungseinrichtung bei Betätigung der Entriegelungseinrichtung in die zweite Betriebsart versetzt wird und nach der Betätigung selbsttätig mittels des Federelements (18) in die erste Betriebsart zurückkehrt.

6. Bodenbearbeitungsgerät nach Anspruch 5,
wobei das Sicherungselement (8) der Sicherungseinrichtung (S) mit der Entriegelungseinrichtung (21) mittels eines Seilzugs oder eines Bowdenzugs verbunden ist.

7. Bodenbearbeitungsgerät nach Anspruch 1 oder 2,
wobei die Verstelleinrichtung (V) an dem zumindest einen Klappteil (5, 6) mittels einer einen Gelenkbolzen (12a) aufweisenden Gelenkanordnung (12) beweglich verbunden ist, und die Sicherungseinrichtung (S) ein Sicherungselement (81) aufweist, wobei in der ersten Betriebsart das Sicherungselement den Gelenkbolzen verriegelt.

8. Bodenbearbeitungsgerät nach einem der Ansprüche 1 bis 7,
wobei dem Betätigungszylinder (10)von außen ein unter Druck stehendes Fluid zugeführt wird, wobei die Entriegelungseinrichtung (21 ) ausgebildet ist, die Fluidzufuhr in der ersten Betriebsart der Sicherungseinrichtung (S) zu verhindern und in der zweiten Betriebsart freizugeben.

9. Bodenbearbeitungsgerät nach Anspruch 1 oder 2,
wobei die Sicherungseinrichtung (S) ein Sicherungselement (8; 81) aufweist, das mittels Schwerkraft oder mittels Federkraft in Richtung der zweiten Betriebsart der Sicherungseinrichtung vorgespannt ist.

10. Bodenbearbeitungsgerät nach Anspruch 9,
wobei der Betätigungszylinder (10) einen ersten und/oder zweiten Endanschlag (72a, 72b) aufweist, um die Bewegung des Sicherungselements (8; 81) in einer Richtung oder in beiden Richtungen zu begrenzen.

11. Bodenbearbeitungsgerät nach Anspruch 9 oder 10,
wobei die Federkraft durch eine Spiralfeder zwischen dem Sicherungselement (81) und dem Betätigungszylinder (10) ausgeübt wird.

12. Bodenbearbeitungsgerät nach einem der Ansprüche 1 bis 12,
wobei die Sicherungseinrichtung (S) in der Weise ausgebildet ist, dass bei dem Versetzten des zumindest einen Klappteils (5, 6) von der Arbeitsposition in die Grundposition das Sicherungselement (8; 81) die Verstelleinrichtung (V) selbsttätig wieder verriegelt.

13. Bodenbearbeitungsgerät nach einem der Ansprüche 1 bis 11,
wobei das Sicherungselement (8; 81) an dem Betätigungszylinder (10) angeordnet ist.
